# EUROPEAN PATENT APPLICATION

(11) **EP 4 568 095 A1**
(43) Date of publication of application: **11.06.2025**
(21) Application number: 23849769.7
(22) Date of filing: 15.06.2023
(51) Int. Cl.: H02M 7/12, H02J 50/12

(54) **POWER RECEIVING DEVICE, AND PROGRAM**

(30) Priority: 05.08.2022 JP 2022125686
(71) Applicant: DENSO CORPORATION, Kariya-city, Aichi 448-8661 (JP)
(72) Inventor: TAKAHASHI, Masaya, Kariya-city, Aichi 448-8661 (JP); SHIBANUMA, Mitsuru, Kariya-city, Aichi 448-8661 (JP); TAKAHASHI, Eisuke, Kariya-city, Aichi 448-8661 (JP); YAMAGUCHI, Nobuhisa, Kariya-city, Aichi 448-8661 (JP)
(74) Representative: TBK
(86) International application number: PCT/JP2023/022189
(87) International publication number: WO 2024/029209

(57) **Abstract**

In a switching control of a synchronous rectification circuit (240), a power receiving device (200) performs a power supply control including repeatedly performing: a first rectification mode (M1) in which in response to detection of an energization of a first bridge circuit, a first high-side switch and a second low-side switch are turned on and a first low-side switch and a second high-side switch are turned off; and a second rectification mode (M3) in which in response to detection of an energization of a second bridge circuit, the first low-side switch and the second high-side switch are turned on and the first high-side switch and the second low-side switch are turned off, and performs a power adjustment control including: a first commutation mode (M2) in which the first high-side switch is turned off and the first low-side switch is turned on during the first rectification mode; and a second commutation mode (M4) in which the second high-side switch is turned off and the second low-side switch is turned on during the second rectification mode.

## Description

### [CROSS-REFERENCE TO RELATED APPLICATION]

This application is based on Japanese Patent Application No. 2022-125686 filed August 5, 2022, the description of which is incorporated herein by reference.

### [Technical Field]

The present disclosure related to a power receiving device and a program.

### [Background Art]

A known power receiving device includes a power-receiving-side coil that transmits/receives an electric power to/from a power-transmitting-side coil, which is connected to a power-transmitting-side DC/AC conversion circuit, by magnetic coupling, a power-receiving-side AC/DC conversion circuit connected to the power-receiving-side coil, an output capacitor connected to a DC-output side of the power-receiving-side AC/DC conversion circuit, and a current sensor that measures a current flowing in a load connected to the output capacitor (for example, Japanese Patent No. 701877). In the power receiving device, when a voltage of the load is regulated to fall within a preset range by the power-transmitting-side DC/AC conversion circuit, a duration of a commutation mode, in which a current to the capacitor is to be reduced to zero, is changed by a power adjustment control of the power-receiving-side AC/DC conversion circuit in accordance with a load current value detected by the current sensor. The power adjustment control is a so-called power adjustment control based on diode rectification and only a part of rectifying elements are to be subjected to a switching control in the commutation mode.

### [Summary of the Invention]

However, diode rectification sometimes leads to a large power loss. In this case, there are possibilities of an increase in size of equipment of the power receiving device and a decrease in system efficiency. Accordingly, the power receiving device is desired to be improved in efficiency by synchronous rectification in terms of a reduction in power loss.

The present disclosure may be implemented in the following aspect.

According to an aspect of the present disclosure, provided is a power receiving device configured to wirelessly receive an alternating-current power transmitted from a power transmitting device and supply the alternating-current power to a load device. The power receiving device includes: a power receiving resonance circuit including a power receiving coil and a resonance capacitor for producing resonance of the power receiving coil; a synchronous rectification circuit including a plurality of bridge circuits, the plurality of bridge circuits including a first bridge circuit including a first high-side switch and a first low-side switch and a second bridge circuit including a second high-side switch and a second low-side switch, the synchronous rectification circuit being configured to convert the alternating-current power received by the power receiving coil into a direct-current power; and a control unit configured to control the plurality of bridge circuits. The control unit is configured to perform a power supply control, the power supply control including repeatedly performing: a first rectification mode in which in response to detection of an energization of the first bridge circuit, the first high-side switch and the second low-side switch are turned on and the first low-side switch and the second high-side switch are turned off; and a second rectification mode in which in response to detection of an energization of the second bridge circuit, the first low-side switch and the second high-side switch are turned on and the first high-side switch and the second low-side switch are turned off. The control unit is configured to perform a power adjustment control, the power adjustment control including: a first commutation mode in which the first high-side switch is turned off and the first low-side switch is turned on during the first rectification mode; and a second commutation mode in which the second high-side switch is turned off and the second low-side switch is turned on during the second rectification mode.

The power receiving device in this aspect makes it possible to perform a highly efficient power adjustment control by virtue of the switching control to switch on/off of each of the rectifying elements of the synchronous rectification circuit.

### [Brief Description of the Drawings]

The above and other objects, features, and advantages of the present disclosure will become more apparent from the following detailed description made with reference to the accompanying drawings. The drawings are as follows.
Fig. 1 is an illustration of a schematic configuration of a wireless power transfer system including a power receiving device according to an embodiment.
Fig. 2 is a timing chart indicating an outline of switching control of a synchronous rectification circuit that is to be performed by the power receiving device.
Fig. 3 is a schematic illustration of an operation state of a rectifying element and a current flow in a first rectification mode.
Fig. 4 is a schematic illustration of an operation state of the rectifying element and a current flow in a first commutation mode.
Fig. 5 is a schematic illustration of an operation state of the rectifying element and a current flow in a second rectification mode.
Fig. 6 is a schematic illustration of an operation state of the rectifying element and a current flow in a second commutation mode.
Fig. 7 is an illustration of a configuration of a power receiving device according to a second embodiment.
Fig. 8 is a timing chart illustrating a detail of a peak current mode control.
Fig. 9 is an illustration of a configuration of a power receiving device according to a third embodiment.
Fig. 10 is an illustration of a configuration of a power receiving device according to a fourth embodiment.
Fig. 11 is an illustration of a configuration of a power receiving device according to a fifth embodiment.
Fig. 12 is a first illustration of a configuration of a wireless power transfer system according to another embodiment.
Fig. 13 is a second illustration of a configuration of a wireless power transfer system according to another embodiment.
Fig. 14 is a third illustration of a configuration of a wireless power transfer system according to another embodiment.
Fig. 15 is a fourth illustration of a configuration of a wireless power transfer system according to another embodiment.

### [Description of Embodiments]

### A. First Embodiment:

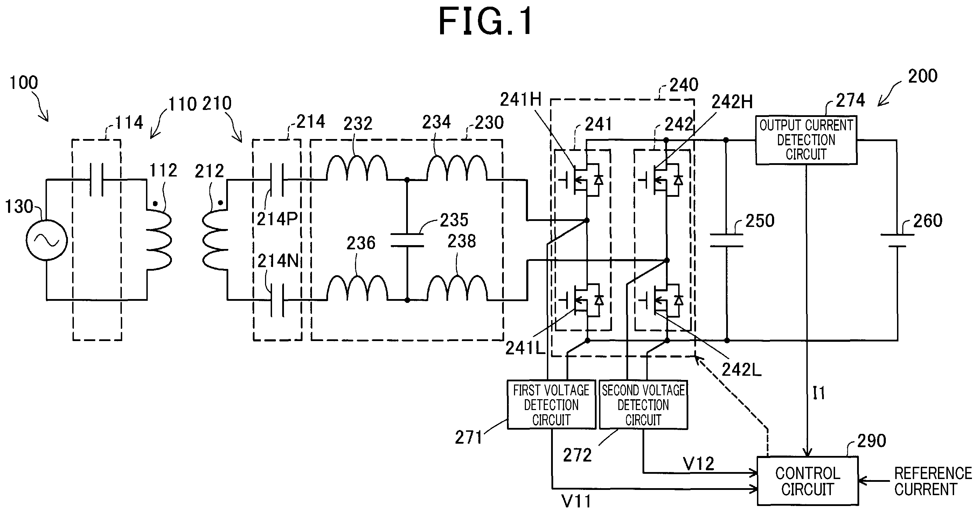

As illustrated in Fig. 1, a wireless power transfer system includes a power transmitting device 100 and a power receiving device 200 and an electric power is to be wirelessly supplied from the power transmitting device 100 to the power receiving device 200. The power transmitting device 100 includes a power transmitting resonance circuit 110 and an alternating-current source device 130.

The power transmitting resonance circuit 110 includes a power transmitting coil 112 and a power transmitting resonance capacitor 114 connected in series to the power transmitting coil 112. The power transmitting resonance capacitor 114 is a resonance capacitor for producing resonance of the electric power supplied to the power transmitting coil 112. A capacitance of the power transmitting resonance capacitor 114 during power supply is set so that an operating frequency and a resonance frequency are substantially equivalent to each other based on a self-inductance of the power transmitting coil 112. In a resonant coupling state where the power transmitting coil 112 is magnetically coupled to a power receiving coil 212, the power transmitting resonance circuit 110 transmits an alternating-current power from the power transmitting coil 112 to the power receiving coil 212 using an electromagnetic induction phenomenon. An operating frequency of the power transmitting device 100 may be set as desired. In the present embodiment, the operating frequency of the power transmitting device 100, for example, 85 kHz, is set by using a preset power transmission frequency defined in accordance with the Radio Law or the like.

The alternating-current source device 130 supplies the alternating-current power at the preset operating frequency to the power transmitting resonance circuit 110. The alternating-current source device 130 includes a power source circuit and a power transmission circuit. The power source circuit, which is, for example, an AC/DC converter circuit, converts an alternating-current power supplied from an external power source such as a system power source into a direct-current power. The power transmission circuit is an inverter or the like that converts the direct-current power supplied from the power source circuit into the alternating-current power at the operating frequency. The power transmission circuit may further include a rectification circuit, a filter circuit, and the like.

The power receiving device 200 wirelessly receives the alternating-current power transmitted from the power transmitting device 100 and supplies the alternating-current power to a load device. The power receiving device 200 is to be installed to a variety of devices that work using an electric power, such as an electronic apparatus and an electric vehicle. The power receiving device 200 includes a power receiving resonance circuit 210, an immittance converter 230, a synchronous rectification circuit 240, a smoothing capacitor 250, and a battery 260.

The power receiving resonance circuit 210 includes the power receiving coil 212 and a power receiving resonance capacitor 214, which is a resonance capacitor, connected in series to the power receiving coil 212. A capacitance of the power receiving resonance capacitor 214 during power supply is set so that an operating frequency and a resonance frequency are substantially equivalent to each other based on, for example, a self-inductance of the power receiving coil 212. The power transmitting coil 112 becomes electromagnetically coupled to the power receiving coil 212 by putting the power receiving coil 212 into a facing state of facing the power transmitting coil 112. In a resonant coupling state where the power receiving coil 212 is magnetically coupled to the power transmitting coil 112, the power receiving resonance circuit 210 wirelessly receives an alternating-current power induced in the power receiving coil 212 from the power transmitting coil 112. In the present embodiment, the power receiving resonance capacitor 214 includes a positive-side first capacitor 214P and a negative-side second capacitor 214N. The respective resonance capacitors are disposed on both the positive and negative sides, which makes it possible to reduce common mode noise. It should be noted that the negative-side second capacitor 214N may be omitted.

The immittance converter 230 removes harmonic noise likely to be contained in the alternating-current power received by the power receiving resonance circuit 210. In the present embodiment, the immittance converter 230 is a so-called T-LCL immittance converter including an input-side first reactor 232 and an output-side first reactor 234, which are disposed on the positive side, and a capacitor 235. Inductances of the reactors 232, 234 and a capacitance of the capacitor 235 are set so that immittance characteristics are obtainable at the operating frequency. In the present embodiment, the immittance converter 230 further includes an input-side second reactor 236 and an output-side second reactor 238, which are disposed on the negative side. The respective reactors are disposed on both the positive side and the negative side, which makes it possible to reduce common mode noise. It should be noted that the input-side second reactor 236 and the output-side second reactor 238 may be omitted. Moreover, the immittance converter 230 may be a so-called CL immittance converter, from which the input-side first reactor 232 and the input-side second reactor 236 are omitted, in place of the T-LCL immittance converter. In this case, the output-side second reactor 238 may further be omitted.

The synchronous rectification circuit 240 converts the alternating-current power received by the power receiving coil 212 into a direct-current power, which can be supplied to the battery 260. The synchronous rectification circuit 240 includes a plurality of bridge circuits. In the present embodiment, the synchronous rectification circuit 240 is a single-phase bridge rectifier including, as rectifying elements, four MOSFETs (metal-oxide-semiconductor field-effect transistors). More specifically, the synchronous rectification circuit 240 includes two bridge circuits: a first bridge circuit 241 including a first high-side switch 241H and a first low-side switch 241L and a second bridge circuit 242 including a second high-side switch 242H and a second low-side switch 242L. The single-phase bridge rectifier is also referred to as full-bridge circuit. It should be noted that the synchronous rectification circuit 240 is not limited to the single-phase bridge rectifier and may be provided by, for example, any of a variety of full-wave rectifiers such as a three-phase bridge rectification circuit including three bridge circuits including six rectifying elements or twelve-phase rectification including a plurality of three-phase bridge rectification circuits.

The rectifying elements are each to be controlled by a control circuit 290 and switched by, for example, a gate signal generated by a bootstrap circuit. A current rectified by the synchronous rectification circuit 240 is to be smoothened by charge and discharge of the smoothing capacitor 250 connected in parallel to the battery 260. It should be noted that the rectifying elements are not limited to the MOSFETs and may be provided by, for example, junction FETs (JFETs), IGBTs (Insulated Gate Bipolar Transistors), or the like or any of a variety of switching elements including a body diode or a parallelly connected diode. The body diode is also referred to as parasitic diode, internal diode, or the like in some cases. Hereinbelow, a body diode of the first high-side switch 241H is also referred to as "first high-side body diode", a body diode of the first low-side switch 241L is also referred to as "first low-side body diode", a body diode of the second high-side switch 242H is also referred to as "second high-side body diode", and a body diode of the second low-side switch 242L is also referred to as "second low-side body diode."

The synchronous rectification circuit 240 is connected to a first voltage detection circuit 271 and a second voltage detection circuit 272. In the present embodiment, the first voltage detection circuit 271 is connected to both ends of the first low-side switch 241L, functioning as a first voltage detecting unit that detects a terminal-to-terminal voltage V11, so-called drain-to-source voltage (hereinafter, also referred to as "DS voltage"), of the first low-side switch 241L. The second voltage detection circuit 272 is connected to both ends of the second low-side switch 242L, functioning as a second voltage detecting unit that detects a terminal-to-terminal voltage V12 of the second low-side switch 242L. A detection result of each of the DS voltages is to be outputted to the control circuit 290. This enables the control circuit 290 to detect a rise in a terminal-to-terminal voltage of the first low-side switch 241L and a rise in a terminal-to-terminal voltage of the second low-side switch 242L. It should be noted that in order to detect a drop in a terminal-to-terminal voltage of the first high-side switch 241H instead of the first low-side switch 241L, the first voltage detection circuit 271 may be connected to both ends of the first high-side switch 241H to detect a DS voltage of the first high-side switch 241H. Moreover, in order to detect a drop in a terminal-to-terminal voltage of the second high-side switch 242H instead of the second low-side switch 242L, the second voltage detection circuit 272 may be connected to both ends of the second high-side switch 242H to detect a DS voltage of the second high-side switch 242H.

As illustrated in Fig. 1, the power receiving device 200 of the present embodiment includes an output current detection circuit 274 between the smoothing capacitor 250 and the battery 260. The output current detection circuit 274 is connected in series to the battery 260, functioning as a first current detecting unit that detects an output current of the synchronous rectification circuit 240. In an example in Fig. 1, the output current of the synchronous rectification circuit 240 is an output current I1 smoothened by the smoothing capacitor 250. The output current I1 detected by the output current detection circuit 274 is to be outputted to the control circuit 290.

The battery 260 is an example of a load device for which the alternating-current power induced in the power receiving resonance circuit 210 is to be used. The battery 260 is chargeable by supplying the alternating-current power obtained by the power receiving resonance circuit 210. The electric power charged in the battery 260 is to be used by, for example, a device and the like installed in the power receiving device 200. It should be noted that in the example in Fig. 1, the load device includes the synchronous rectification circuit 240 and the smoothing capacitor 250. The load device is limited to none of the synchronous rectification circuit 240, the smoothing capacitor 250, and the battery 260 and a variety of devices that use the alternating-current power outputted from the power receiving resonance circuit 210 are usable.

The control circuit 290 is a microcomputer including non-illustrated CPU and memory, such as a ROM or a RAM, or a logic circuit. The memory stores, for example, a program for implementing functions provided in the present embodiment, such as a function of a control unit that performs a switching control of each of the rectifying elements of the synchronous rectification circuit 240 and the CPU develops the program in the RAM or the like to implement all or a part of the functions. The control circuit 290 is able to independently control each of the first bridge circuit 241 and the second bridge circuit 242.

The control circuit 290 includes a non-illustrated counter for time measurement. Hereinbelow, a counter used for time measurement during a switching control of the first bridge circuit 241 is also referred to as "first counter" and a counter used for time measurement during a switching control of the second bridge circuit 242 is also referred as "second counter." It should be noted that the control circuit 290 may include a clock in place of the counter.

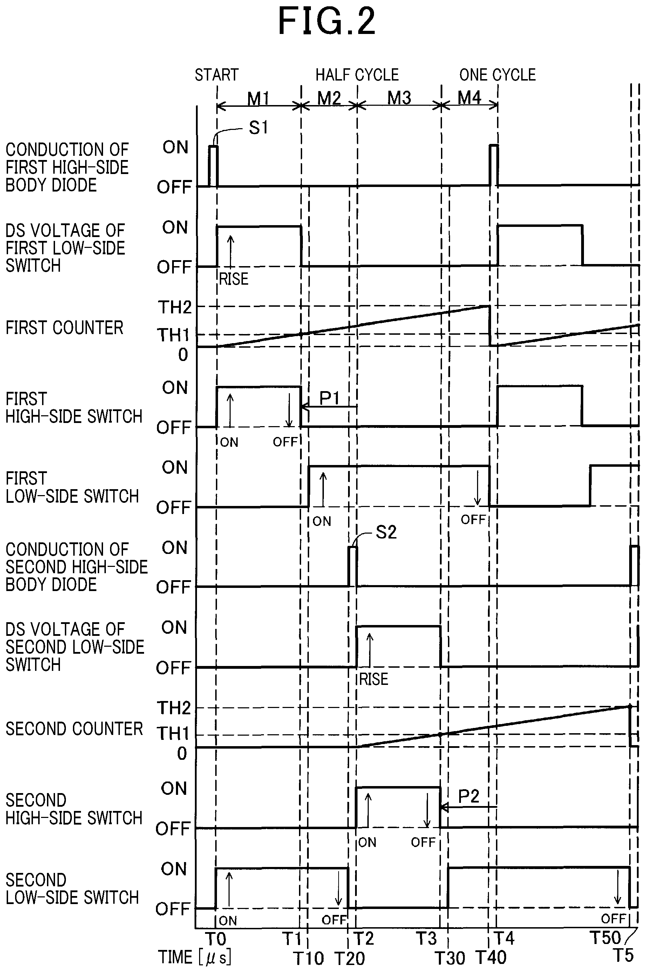

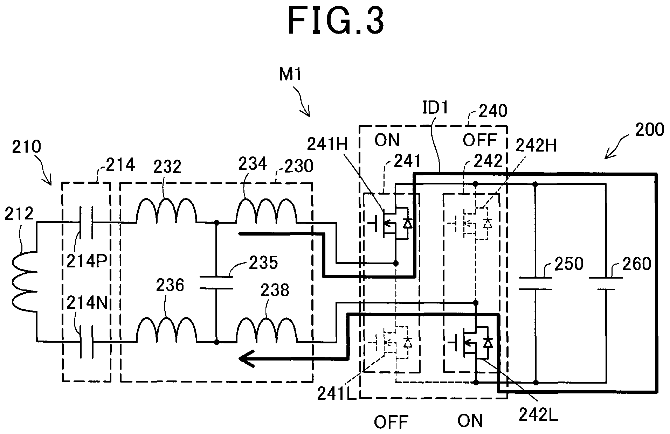

Description will be given on the switching control of the rectifying elements during a power supply control and a power adjustment control that are to be performed by the control circuit 290 with use of Fig. 2 and, as appropriate, Fig. 3 to Fig. 6. Horizontal axes shown in Fig. 2 are time axes (unit: µsec.). Vertical axes indicate whether each of the rectifying elements is turned on or off, whether the body diode of each of the rectifying elements is energized, and results of counting of pulses with the first counter and the second counter. The uppermost tier in Fig. 2 schematically indicates timings of "half cycle" and "one cycle" from "start" of a cycle during the switching control of the first bridge circuit 241. The "one cycle" is the same as the operating frequency and the output current from the immittance converter 230 is to be inverted every half cycle. In the present embodiment, the "one cycle" is equivalent to the power transmission frequency, 85 kHz. It should be noted that in Fig. 3 to Fig. 6, the illustration of the first voltage detection circuit 271, the second voltage detection circuit 272, the output current detection circuit 274, and the control circuit 290 is omitted for the purpose of convenience.

In a state before time T0 in Fig. 2, the synchronous rectification circuit 240 is in a non-facing state where the power receiving coil 212 does not face the power transmitting coil 112. In the non-facing state, the synchronous rectification circuit 240 is on standby with the individual rectifying elements all turned off (opened). In response to the power receiving coil 212 and the power transmitting coil 112 being put into the facing state, the power receiving resonance circuit 210 receives the alternating-current power from the power transmitting coil 112 through the power receiving coil 212. At this time, the output current from the immittance converter 230 flows through the body diode of the first high-side switch 241H as illustrated as a signal S1 in Fig. 2. As a result, the terminal-to-terminal voltage of the first low-side switch 241L rises at the time T0. The rise in the terminal-to-terminal voltage is detected by the first voltage detection circuit 271.

The control circuit 290 detects the energization of the first bridge circuit 241 by detecting the rise in the terminal-to-terminal voltage of the first low-side switch 241L from a detection result of the first voltage detection circuit 271. The control circuit 290 outputs a predetermined gate-to-source voltage (hereinafter, also referred to as "GS voltage") to the first high-side switch 241H and the second low-side switch 242L through the bootstrap circuit to switch on (short) the first high-side switch 241H and the second low-side switch 242L. A cycle of the switching control of the first bridge circuit 241 is started from this time point and the control circuit 290 starts time measurement with the first counter. It should be noted that the first low-side switch 241L and the second high-side switch 242H are in an off (opened) state during a first cycle. The first low-side switch 241L and the second high-side switch 242H are in an on state during second and subsequent cycles. In this case, the control circuit 290 switches them off.

As a result, a current flows in a direction ID1 indicated by an arrow and the current flows through the smoothing capacitor 250 and the battery 260 as illustrated in Fig. 3. As illustrated in Fig. 2 and Fig. 3, an on/off state of each of the rectifying elements during this time period is also referred to as "first rectification mode M1." It should be noted that in Fig. 3 to Fig. 6, the rectifying element put into an on (shorted) state is depicted as a solid line and the rectifying element put into an off (opened) state is depicted as a broken line.

In a case where the power adjustment control is not to be performed, the first rectification mode M1 is switched to a second rectification mode M3 at the elapse of a half cycle according to the first counter or the elapse of one cycle according to the second counter. After that, the first rectification mode M1 and the second rectification mode M3 are likewise to be repeatedly performed. In contrast, in a case where the power adjustment control is to be performed, the control circuit 290 adjusts the length of a first commutation mode during one cycle by adjusting a timing of switching from the first rectification mode M1 to the first commutation mode as illustrated in Fig. 2. Examples of the case where the power adjustment control is to be performed include a case where the amount of charge to the battery 260 is to be reduced due to a high SOC of the battery 260, or the like. Accordingly, in the load device, an input current value is decreased or a reference current as a target value for increasing the input current value having been decreased is set. The control circuit 290 computes, for example, a time period of the first commutation mode using the current value detected by the output current detection circuit 274 and the reference current and calculates a threshold TH1 of the first counter corresponding to the time period of the first commutation mode. It should be noted that a table or the like showing a correspondence relationship between the current value detected by the output current detection circuit 274 and the reference current and the time period of the first commutation mode may be used for the determination of the time period of the first commutation mode.

In the present embodiment, a time period when no current flows through the smoothing capacitor 250 and the battery 260 is generated by decreasing the timing of switching from the first rectification mode M1 to the first commutation mode to be shorter than half a cycle, that is, a half cycle of the preset power transmission frequency during the power adjustment control as indicated by an arrow P1 in Fig. 2. This increases an on-time of the first low-side switch 241L during the power adjustment control to be longer than a half cycle. Such a configuration makes it possible to reduce a capacity of a capacitor of the bootstrap circuit, which is to be used to drive a gate of the first bridge circuit 241, as compared with by the power adjustment control where the first rectification mode is to be switched to the first commutation mode at a timing when the half cycle passes. This makes it possible to reduce an increase in size of the power receiving device 200.

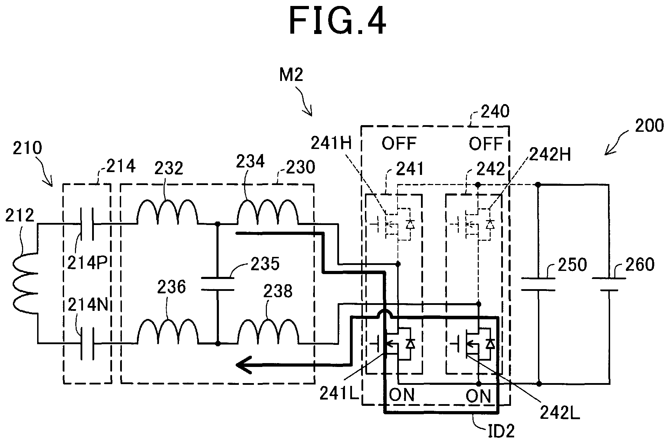

At time T1 illustrated in Fig. 2, a count value of the first counter becomes the threshold TH1 or more and the control circuit 290 switches the first high-side switch 241H off (opened) and switches the first low-side switch 241L on (shorted). In the present embodiment, in order to provide a so-called dead time, the first low-side switch 241L is switched on at time T10 at a predetermined interval after the completion of switch-off of the first high-side switch 241H. As a result, a current flows in a direction ID2 indicated by an arrow and an input voltage becomes zero as illustrated in Fig. 4, so that no current flows through the smoothing capacitor 250 and the battery 260. A state of each of the rectifying elements during this time period is also referred to as "first commutation mode M2" as illustrated in Fig. 2 and Fig. 4.

Time T2 illustrated in Fig. 2 corresponds to a half cycle during the switching control of the first bridge circuit 241, or one cycle during the switching control of the second bridge circuit 242. During a first cycle, in response to detecting the half cycle during the switching control of the first bridge circuit 241 being reached in accordance with the first counter or one cycle during the switching control of the second bridge circuit 242 in accordance with the second counter, the control circuit 290 switches off the second low-side switch 242L. During the second and subsequent cycles, the control circuit 290 turns off the second low-side switch 242L every one cycle according to the second counter. In the present embodiment, the control circuit 290 switches off the second low-side switch 242L at time T20 shorter than the time T2, which corresponds to a half cycle, by a predetermined interval in order to provide a time period for the body diode of the second high-side switch 242H to conduct.

As the second high-side switch 242H and the second low-side switch 242L are turned off at the time T20, the output current from the immittance converter 230 flows through the body diode of the second high-side switch 242H as illustrated as a signal S2 in Fig. 2. As a result, the terminal-to-terminal voltage of the second low-side switch 242L rises at the time T2. The terminal-to-terminal voltage is to be detected by the second voltage detection circuit 272.

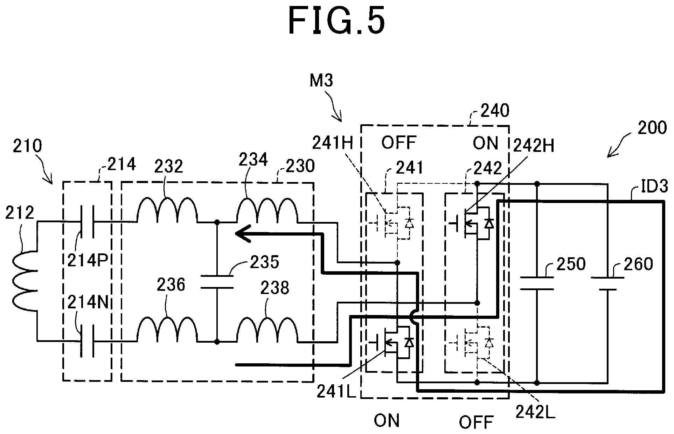

The control circuit 290 detects the energization of the second bridge circuit 242 by detecting the rise in the terminal-to-terminal voltage of the second low-side switch 242L from a detection result of the second voltage detection circuit 272. The control circuit 290 outputs the predetermined GS voltage to the first low-side switch 241L and the second high-side switch 242H to switch on the first low-side switch 241L and the second high-side switch 242H and switch off the first high-side switch 241H and the second low-side switch 242L. It should be noted that the first high-side switch 241H is already in the off-state and the first low-side switch 241L is already in the on-state after the first commutation mode M2 as illustrated in Fig. 2. As a result, a current flows in a direction ID3 indicated by an arrow and the current flows through the smoothing capacitor 250 and the battery 260 as illustrated in Fig. 5. The cycle of the switching control of the second bridge circuit 242 is started from a time point when the first low-side switch 241L and the second high-side switch 242H are switched on and the control circuit 290 starts time measurement with the second counter. A state of each of the rectifying elements during this time period is also referred to as "second rectification mode M3" as illustrated in Fig. 2 and Fig. 5.

In a case where the power adjustment control is not to be performed, the second rectification mode M3 is switched to the first rectification mode M1 after the elapse of one cycle according to the first counter or a half cycle according to the second counter. It should be noted that the "one cycle" and "half cycle" in the present disclosure include a time point at the elapse of one cycle or half cycle and a dead time or a time point advanced or delayed with respect to one cycle or half cycle by a predetermined interval in order to cause the body diode to conduct. In a case where the power adjustment control is to be performed, the control circuit 290 adjusts a length of a second commutation mode M4 during one cycle by adjusting a timing of switching from the second rectification mode M3 to the second commutation mode as illustrated in Fig. 2. In the present embodiment, the control circuit 290 determines a time period of the second commutation mode M4 using the current value detected by the output current detection circuit 274 and the reference current as the time period of the first commutation mode M2 and determines the threshold TH1 of the second counter corresponding to the time period of the second commutation mode M4.

In the present embodiment, a time period when no current flows through the smoothing capacitor 250 and the battery 260 is generated by decreasing the timing of switching from the second rectification mode M3 to the second commutation mode to be shorter than the half cycle of the power transmission frequency during the power adjustment control as indicated by an arrow P2 in Fig. 2. Such a configuration increases an on-time of the second low-side switch 242L during the power adjustment control to be longer than the half cycle. Such a configuration makes it possible to reduce an increase in capacity of a bootstrap capacitor of the second bridge circuit 242 and reduce an increase in size of the power receiving device 200.

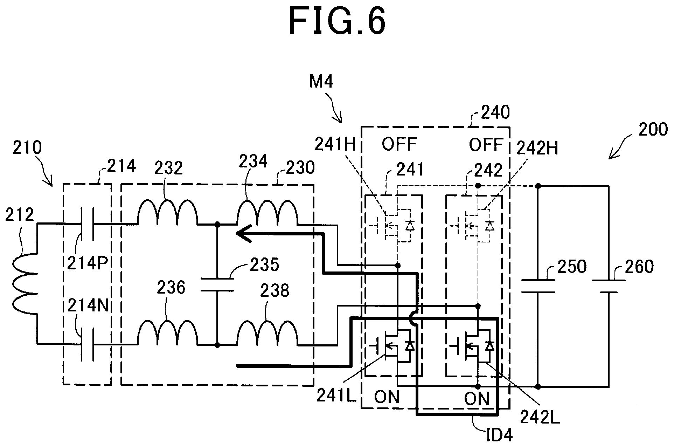

At time T3 illustrated in Fig. 2, a count value of the second counter becomes the threshold TH1 or more and the control circuit 290 switches off the second high-side switch 242H and switches on the second low-side switch 242L. In the present embodiment, in order to provide a dead time, the second low-side switch 242L is switched on at time T30 at a predetermined interval after the second high-side switch 242H is switched off. As a result, a current flows in a direction ID4 indicated by an arrow and an input voltage becomes zero as illustrated in Fig. 6, so that no current flows through the smoothing capacitor 250 and the battery 260. A state of each of the rectifying elements during this time period is also referred to as " second commutation mode M4" as illustrated in Fig. 2 and Fig. 6.

The first rectification mode M1 and the second rectification mode M3 are included in the "power supply control" to supply an electric power to the load device including the battery 260 by the control of the synchronous rectification circuit 240. The first commutation mode M2 and the second commutation mode M4 correspond to, within the power supply control, the "power adjustment control" in which the supply of an electric power is reduced by providing a time period when the current flowing through the load device becomes zero. The first commutation mode M2 is a mode to be switched from the first rectification mode M1 and the second commutation mode M4 is a mode to be switched from the second rectification mode M3.

Time T4 illustrated in Fig. 2 corresponds to one cycle of the switching control during the first bridge circuit 241. In response to, for example, detecting one cycle being reached in accordance with the first counter, the control circuit 290 switches off the first low-side switch 241L. It may be determined whether one cycle has been reached in accordance with the first counter in accordance with, for example, whether the count value of the first counter becomes a preset threshold TH2 corresponding to one cycle, or more.

Here, if the first low-side switch 241L is still on, the body diode of the first high-side switch 241H does not conduct. Accordingly, in a case where the first low-side switch 241L is still on, for example, even after the elapse of one cycle, there is a possibility that the energization of the first bridge circuit 241 fails to be detected and a cyclic synchronous rectification operation fails to be performed. In the present embodiment, the control circuit 290 switches off the first low-side switch 241L every one cycle corresponding to the power transmission frequency, which makes it possible to repeat the cyclic synchronous rectification operation with a higher reliability than in a case where the first low-side switch 241L is switched off in response to, for example, a drop in the DS voltage of the first high-side switch 241H being detected using a sensor or the like. Moreover, in the present embodiment, the control circuit 290 further switches off the first low-side switch 241L at time T40 shorter than the time T4 by a predetermined interval in order to provide a time period for the body diode of the first high-side switch 241H to conduct.

As the output current from the immittance converter 230 flows through the body diode of the first high-side switch 241H, the control circuit 290 detects the energization of the first bridge circuit 241 and starts the first rectification mode M1 for the second cycle. The above is to be repeated likewise for the subsequent cycles. It should be noted that during the second and subsequent cycles, the control circuit 290 switches off the second low-side switch 242L in response to detecting one cycle in accordance with the second counter, for example, the count value of the second counter becoming the threshold TH2 or more, as at time T5 in Fig. 2. This makes it possible to repeat the cyclic synchronous rectification operation with a higher reliability than in a case where the second low-side switch 242L is switched off in response to, for example, a drop in the DS voltage of the second high-side switch 242H being detected using a sensor or the like. In the present embodiment, the control circuit 290 switches off the second low-side switch 242L at time T50 shorter than the time T5, which corresponds to a half cycle, by a predetermined interval in order to provide a time period for the body diode of the second high-side switch 242H to conduct.

As described above, the power receiving device 200 of the present embodiment includes: the power receiving resonance circuit 210 including the power receiving coil 212 and the resonance capacitor; the synchronous rectification circuit 240 including the first bridge circuit 241 including the first high-side switch 241H and the first low-side switch 241L and the second bridge circuit 242 including the second high-side switch 242H and the second low-side switch 242L; and the control circuit 290 that controls the first bridge circuit 241 and the second bridge circuit 242. The control circuit 290 performs the power supply control to repeatedly execute, in response to detection of the energization of the first bridge circuit 241, the first rectification mode M1 in which the first high-side switch 241H and the second low-side switch 242L are turned on and the first low-side switch 241L and the second high-side switch 242H are turned off and, in response to detection of the energization of the second bridge circuit 242, the second rectification mode M3 in which the first low-side switch 241L and the second high-side switch 242H are turned on and the first high-side switch 241H and the second low-side switch 242L are turned off. The control circuit 290 performs the power adjustment control including the first commutation mode M2 in which the first high-side switch 241H is turned off and the first low-side switch 241L is turned on during the first rectification mode M1, and the second commutation mode M4 in which the second high-side switch 242H is turned off and the second low-side switch 242L is turned on during the second rectification mode M3. The power receiving device 200 of the present embodiment makes it possible to perform a highly efficient power adjustment control by virtue of the switching control to switch on/off of each of the rectifying elements of the synchronous rectification circuit 240. This makes it possible to reduce the power loss of the power receiving device 200.

The power receiving device 200 of the present embodiment further includes the output current detection circuit 274 for detecting the output current I1 of the synchronous rectification circuit 240. Using a detection value of the output current detection circuit 274, and reference current as the target value required by the load device, the control circuit 290 adjusts the timing of switching from the first rectification mode M1 to the first commutation mode M2 and the timing of switching from the second rectification mode M3 to the second commutation mode M4 during the power adjustment control. This makes it possible to perform an appropriate power supply based on the requirement from the load device.

The power receiving device 200 of the present embodiment further includes the first voltage detection circuit 271 that detects the terminal-to-terminal voltage V11 of the first low-side switch 241L. The control circuit 290 detects the energization of the first bridge circuit 241 by acquiring a detection result of the first voltage detection circuit 271 and detecting a rise in the terminal-to-terminal voltage V11 of the first low-side switch 241L. The simple configuration of voltage detection, makes it possible to perform the power supply control and the power adjustment control and is likely to be lower in cost than a current sensor.

The power receiving device 200 of the present embodiment further includes the second voltage detection circuit 272 that detects the terminal-to-terminal voltage V12 of the second low-side switch 242L. The control circuit 290 detects the energization of the second bridge circuit 242 by acquiring a detection result of the second voltage detection circuit 272 and detecting a rise in the terminal-to-terminal voltage V12 of the second low-side switch 242L. The simple configuration of voltage detection, makes it possible to perform the power supply control and the power adjustment control and is likely to be lower in cost than an current sensor.

In the power receiving device 200 of the present embodiment, in a case where the first low-side switch 241L is on at the time T4 at the elapse of one cycle corresponding to the preset power transmission frequency since the first high-side switch 241H is turned on in the first rectification mode M1, the control circuit 290 switches off the first low-side switch 241L. It is possible to switch off the first low-side switch 241L every cycle of the power transmission frequency. Accordingly, it is possible to reliably repeat the cyclic synchronous rectification operation as compared with in a case where, for example, the first low-side switch 241L is to be switched off in response to detection of a drop in the DS voltage of the first high-side switch 241H using a sensor or the like. Moreover, in the power receiving device 200 of the present embodiment, the first low-side switch 241L is further switched off at the time T40 shorter than the time T4. This makes it possible to put the body diode of the first high-side switch 241H into a conductive state at a time point preceding the elapse of one cycle to enable more reliably repeating the synchronous rectification operation every cycle of the power transmission frequency.

In the power receiving device 200 of the present embodiment, in a case where the second low-side switch 242L is on at the time T5 at the elapse of one cycle corresponding to the preset power transmission frequency since the second high-side switch 242H is turned on in the second rectification mode M3, the control circuit 290 switches off the second low-side switch 242L. It is possible to switch off the second low-side switch 242L every cycle of the power transmission frequency. Accordingly, it is possible to reliably repeat the cyclic synchronous rectification operation as compared with in a case where, for example, a drop in the DS voltage of the second high-side switch 242H is to be detected using a sensor or the like. Moreover, in the power receiving device 200 of the present embodiment, the second low-side switch 242L is further switched off at the time T50 shorter than the time T5. This makes it possible to put the body diode of the second high-side switch 242H into a conductive state at a time point preceding the elapse of one cycle to enable more reliably repeating the synchronous rectification operation every cycle of the power transmission frequency.

In the power receiving device 200 of the present embodiment, the control circuit 290 decreases each of the timing of switching from the first rectification mode M1 to the first commutation mode M2 and the timing of switching from the second rectification mode M3 to the second commutation mode M4 to be shorter than the half cycle of the preset power transmission frequency. This makes it possible to increase the on-times of the first low-side switch 241L and the second low-side switch 242L during the power adjustment control to be longer than the half cycle. Therefore, in comparison with a case where the on-time of the first high-side switch 241H and the second high-side switch 242H is increased, it is possible to reduce an increase in capacities of the bootstrap capacitors of the first bridge circuit 241 and the second bridge circuit 242 and reduce an increase in size of the power receiving device 200.

### B. Second Embodiment:

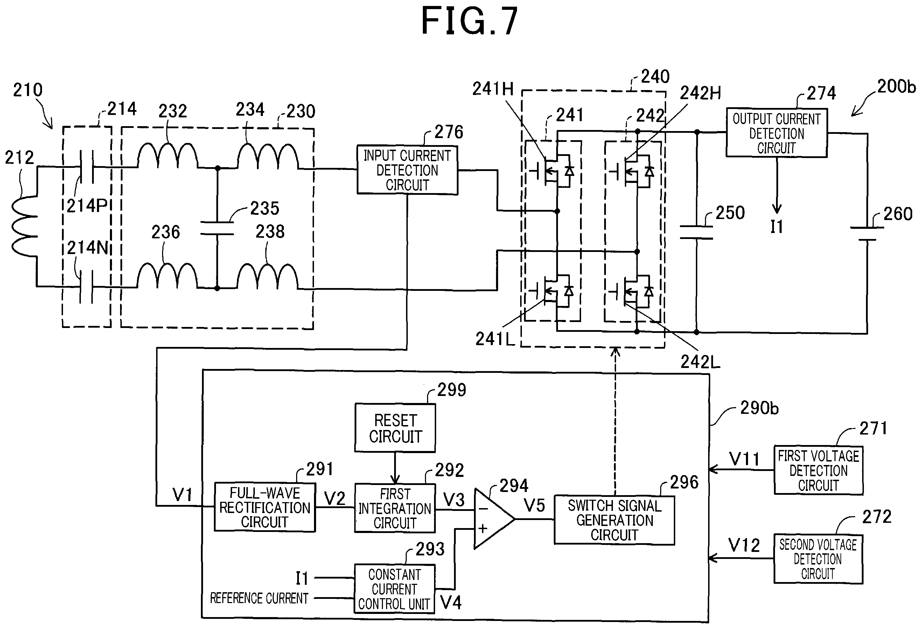

As illustrated in Fig. 7, a power receiving device 200b according to a second embodiment is different from the power receiving device 200 according to the first embodiment in that the power receiving device 200b further includes an input current detection circuit 276 and a control circuit 290b in place of the control circuit 290 and the other components are similar. In the present embodiment, the control circuit 290b adjusts the timing of switching from the first rectification mode M1 to the first commutation mode M2 and the timing of switching from the second rectification mode M3 to the second commutation mode M4 through a peak current mode control. The figure illustrates an example where a difference between the reference current and the output current I1 is large and, accordingly, a feedback control that brings the output current I1 close to the reference current is to be performed using the peak current mode control.

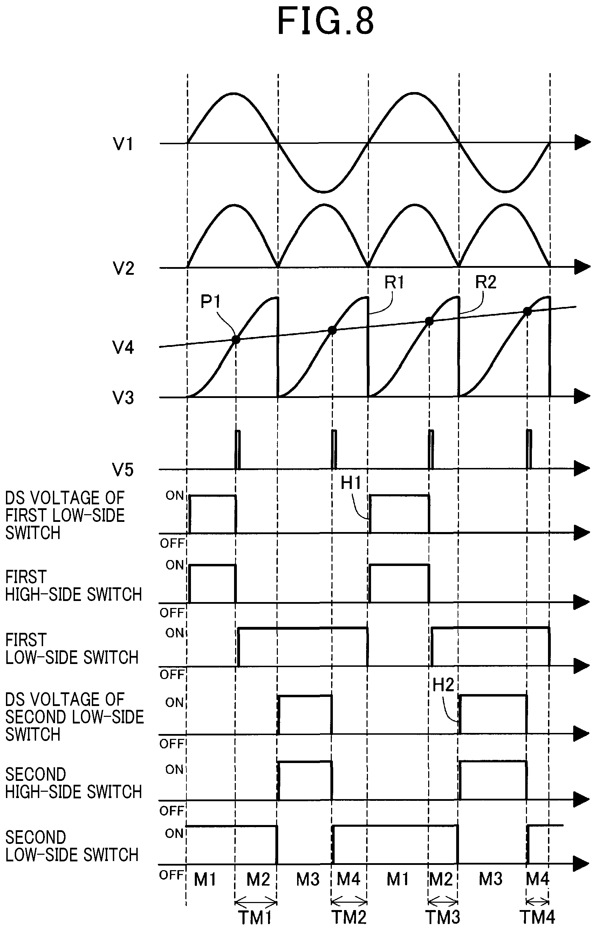

The input current detection circuit 276, which is disposed between the immittance converter 230 and the synchronous rectification circuit 240, functions as a second current detecting unit that detects an input current of the synchronous rectification circuit 240. The control circuit 290b further includes a full-wave rectification circuit 291, a first integration circuit 292, a constant current control unit 293, a comparator 294, and a switch signal generation circuit 296, and a reset circuit 299 in addition to the functional configuration of the control circuit 290 of the first embodiment. An alternating current waveform V1 detected by the synchronous rectification circuit 240 is to be inputted to the full-wave rectification circuit 291 as illustrated in the uppermost tier in Fig. 8. The full-wave rectification circuit 291 full-wave rectifies the inputted current waveform V1 to generate a current waveform V2 illustrated in Fig. 8 and outputs the current waveform V2 to the first integration circuit 292. The full-wave rectification circuit 291 may be provided by, for example, a known full-wave rectification circuit such as a full-bridge circuit including four diodes.

The first integration circuit 292 generates a current waveform V3 illustrated in Fig. 8 by integrating the full-wave rectified current waveform V2 with respect to phase or time. Since a waveform of the current waveform V1 is a sinusoidal wave, the current waveform V3 is converted into a cosine wave by integration through the first integration circuit 292. In other words, the current waveform V2 represented by sin(x)sin(x) is converted into the current waveform V3, which is -cos(x), by integration. If the current waveform V2 remains as a sinusoidal wave as illustrated in Fig. 8, an increase/decrease in current value will occur with respect to the time axis, which is unfavorable for the peak current mode control. In contrast, a current waveform showing a tendency to increase with respect to the horizontal axis as the current waveform V3 is usable for the peak current mode control in the present embodiment.

The reset circuit 299 resets a result of computing by the first integration circuit 292 every predetermined time period. In the present embodiment, the reset circuit 299 is set so that it resets, in response to detection of a rise H1 in the DS voltage of the first low-side switch 241L and a rise H2 in the DS voltage of the second low-side switch 242L, the result of computing by the first integration circuit 292 as indicated by, for example, a waveform R1 and a waveform R2 in Fig. 8. Such a configuration makes it possible to reset the result of computing of the first integration circuit 292 every half cycle of the power transmission frequency to enable the peak current mode control to be performed every half cycle during the switching control of the first bridge circuit 241 and the second bridge circuit 242.

The constant current control unit 293 outputs an output current V4 based on a comparison between the reference current required by the load device and the output current I1 of the synchronous rectification circuit 240 detected by the output current detection circuit 274. In increasing, for example, the current flowing through the battery 260, the constant current control unit 293 outputs the large output current V4 to reduce a difference between the reference current and the output current I1 and, in reducing the current flowing thorough the battery 260, outputs the small output current V4 to increase the difference between the reference current and the output current I1.

The comparator 294 compares the output current V4 and the current waveform V3 and outputs, in response to the current waveform V3 becoming equal to or more than the output current V4, a H-level signal V5 illustrated in Fig. 8. The switch signal generation circuit 296 controls each of the switching elements of the synchronous rectification circuit 240. In addition to having the above function of the control unit to perform the switching control of each of the rectifying elements of the above synchronous rectification circuit 240, the switch signal generation circuit 296 further performs a switching control based on the H-level signal V5 to adjust the timing of switching from the first rectification mode M1 to the first commutation mode M2 and the timing of switching from the second rectification mode M3 to the second commutation mode M4. Specifically, the switch signal generation circuit 296 performs, in response to detection of the H-level signal V5 in the first rectification mode M1, switching to the first commutation mode M2 by turning off the first high-side switch 241H and turning on the first low-side switch 241L, whereas it performs, in response to the H-level signal V5 in the first commutation mode M2, switching to the second commutation mode M4 by turning off the second high-side switch 242H and switches on the second low-side switch 242L. As illustrated in Fig. 8, during the peak current mode control, the output current V4 of the constant current control unit 293 is increased by increasing the reference current, which causes the input current of the battery 260 to be gradually increased as the time periods TM1 to TM4 of the first commutation mode M2 and the second commutation mode M4 are gradually shortened.

The power receiving device 200 of the present embodiment further includes the input current detection circuit 276 that detects the current waveform V1, which is the input current of the synchronous rectification circuit 240, the full-wave rectification circuit 291 that outputs the current waveform V2 provided by full-wave rectification of the current waveform V1 detected by the input current detection circuit 276, and the first integration circuit 292 that outputs the current waveform V3 provided by integration of the current waveform V2 full-wave rectified by the full-wave rectification circuit 291. The control circuit 290b adjusts the timing of switching from the first rectification mode M1 to the first commutation mode M2 and the timing of switching from the second rectification mode M3 to the second commutation mode M4 by the peak current mode control using the current waveform V3 integrated by the first integration circuit 292 in addition to the output current I1, which is the detection value of the output current detection circuit 274, and the reference current. In the power receiving device 200 in this form, it is possible to convert the current waveform into a cosine wave showing a tendency to increase with respect to the time axis through the first integration circuit 292 and perform the peak current mode control. This makes it possible to improve a response performance and line regulation characteristics during the switching control of the control circuit 290b. Therefore, it is possible to perform stable power supply control and power adjustment control even in a case where an alternating-current power received from the power transmitting device 100 is considerably changed, for example, the facing state between the power transmitting device 100 and the power receiving device 200 is considerably changed. Moreover, the use of the first integration circuit 292 makes it possible to reduce an influence of noise on the current waveform.

### C. Third Embodiment:

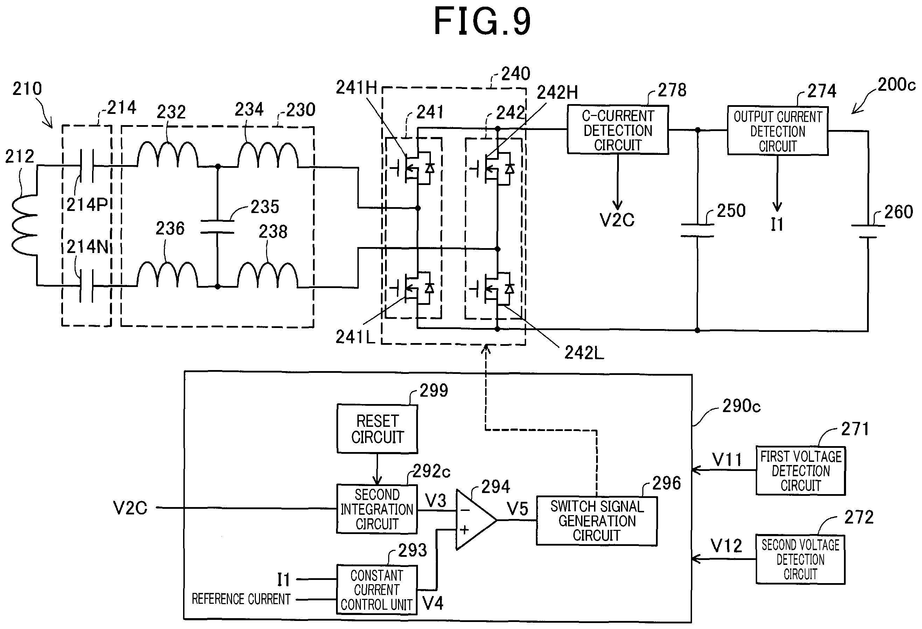

As illustrated in Fig. 9, a power receiving device 200c according to a third embodiment is different from the power receiving device 200b of the second embodiment illustrated in Fig. 7 in that the power receiving device 200c includes a C-current detection circuit 278 and a control circuit 290c in place of the input current detection circuit 276 and the control circuit 290b and the other components are similar. In the power receiving device 200b of the second embodiment, the description is given on the example where the control circuit 290b performs the peak current mode control using the input current of the synchronous rectification circuit 240 detected by the input current detection circuit 276. In contrast, the power receiving device 200c according to the third embodiment performs the peak current mode control using the output current of the synchronous rectification circuit 240 detected by the C-current detection circuit 278.

The C-current detection circuit 278, which is disposed on an output side of the synchronous rectification circuit 240, functions as a third current detection circuit that detects the output current of the synchronous rectification circuit 240. In a case where the power receiving device 200c includes the smoothing capacitor 250, the C-current detection circuit 278 is disposed between the smoothing capacitor 250 and the synchronous rectification circuit 240 as illustrated in Fig. 9. Unlike the current waveform V1 of the input current of the synchronous rectification circuit 240 illustrated in Fig. 8, the output current of the synchronous rectification circuit 240 detected by the C-current detection circuit 278 is in a form of a current waveform V2C in a full-wave rectified state as the current waveform V2.

The control circuit 290c is different from the control circuit 290b described in the second embodiment in that the control circuit 290c includes no full-wave rectification circuit 291 and includes a second integration circuit 292c in place of the first integration circuit 292 and the other components are similar to those of the control circuit 290b. The second integration circuit 292c, which has a similar function to that of the first integration circuit 292, integrates the full-wave rectified current waveform V2C with respect to phase or time and outputs the current waveform V3 illustrated in Fig. 8. Therefore, the power receiving device 200c of the present embodiment is also able to perform the peak current mode control similar to that of the second embodiment.

In the power receiving device 200c of the present embodiment, the control circuit 290c adjusts the timing of switching from the first rectification mode M1 to the first commutation mode M2 and the timing of switching from the second rectification mode M3 to the second commutation mode M4 as in the above second embodiment by performing the peak current mode control using the current waveform V3 integrated by the second integration circuit 292c in addition to the output current I1, which is the detection value of the output current detection circuit 274, and the reference current. The power receiving device 200c of the present embodiment makes it possible to perform the peak current mode control, while the control circuit 290c has a simplified configuration with omission of the full-wave rectification circuit 291.

### D. Fourth Embodiment:

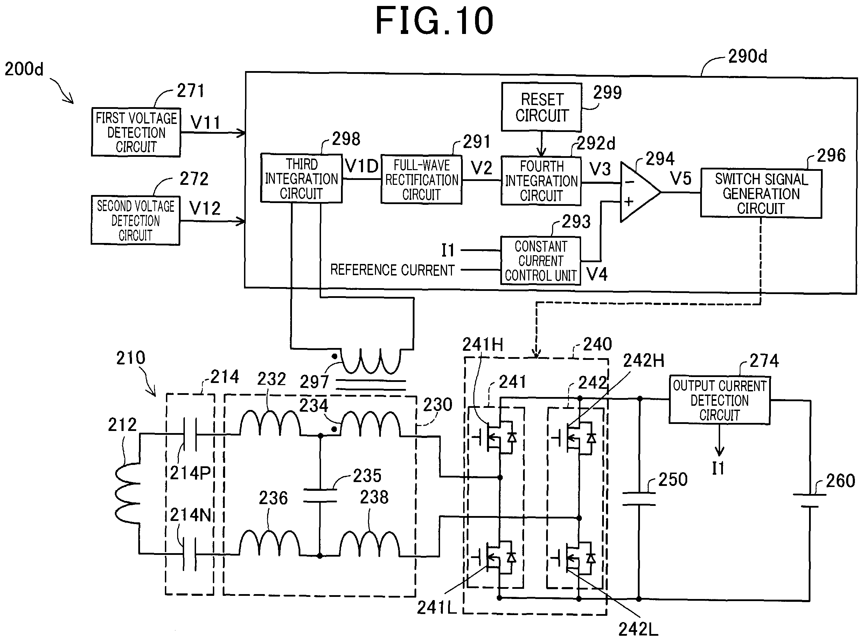

As illustrated in Fig. 10, a power receiving device 200d according to a fourth embodiment is different from the power receiving device 200b of the second embodiment illustrated in Fig. 7 in that the power receiving device 200d includes a reactor voltage acquiring unit 297 and a control circuit 290d in place of the input current detection circuit 276 and the control circuit 290b and the other components are similar to those of the power receiving device 200b of the second embodiment. The power receiving device 200d according to the fourth embodiment performs the peak current mode control using a voltage of an output-side reactor of the immittance converter 230 detected by the reactor voltage acquiring unit 297.

In the present embodiment, the reactor voltage acquiring unit 297 acquires, as the voltage of the output-side reactor of the immittance converter 230, the voltage of the output-side first reactor 234. More specifically, the reactor voltage acquiring unit 297 is a coil that acquires a voltage waveform obtainable by a magnetic coupling to the output-side first reactor 234. In Fig. 9, two parallel lines indicate that the reactor voltage acquiring unit 297 on the power-receiving side is in a state of being magnetically coupled to the output-side first reactor 234. The reactor voltage acquiring unit 297 may be formed by, for example, winding an electrical conductor on a core (an iron core) of the output-side first reactor 234. It should be noted that the reactor voltage acquiring unit 297 may acquire a voltage waveform of the output-side second reactor 238 as the output-side reactor of the immittance converter 230 in place of the output-side first reactor 234.

The control circuit 290d is different from the control circuit 290b described in the second embodiment in that the control circuit 290d further includes a third integration circuit 298 and includes, in place of the first integration circuit 292, a fourth integration circuit 292d and the other components are similar to those of the control circuit 290b. The third integration circuit 298 integrates the voltage waveform of the output-side first reactor 234 acquired by the reactor voltage acquiring unit 297 with respect to phase or time and outputs it to the full-wave rectification circuit 291. The integration of the voltage waveform of the output-side first reactor 234 makes is possible to a current waveform V1D substantially the same as a current flowing through the output-side first reactor 234. The full-wave rectification circuit 291 full-wave rectifies the inputted current waveform V1D to generate the current waveform V2 illustrated in Fig. 8. Similarly to the first integration circuit 292, the fourth integration circuit 292d integrates the current waveform V2 with respect to phase or time and outputs the current waveform V3. After that, a peak current mode control similar to that of the second embodiment is to be likewise performed.

As described above, in the power receiving device 200d of the present embodiment, the current waveform V3 is provided by the integration of the current waveform V2, which is acquired by the reactor voltage acquiring unit 297 and full-wave rectified by the full-wave rectification circuit 291, through the fourth integration circuit 292d, and the control circuit 290d adjusts the timing of switching from the first rectification mode M1 to the first commutation mode M2 and the timing of switching from the second rectification mode M3 to the second commutation mode M4 by performing the peak current mode control using the current waveform V3 in addition to the output current I1, which is the detection value of the output current detection circuit 274, and the reference current as in the above second embodiment. In the power receiving device 200d of the present embodiment, for example, the electrical conductor is wound on the core (iron core) of the output-side first reactor 234 and such a simple configuration makes it possible to detect the current in the power receiving device 200d to enable performing the peak current mode control without a current sensor.

### E. Fifth Embodiment:

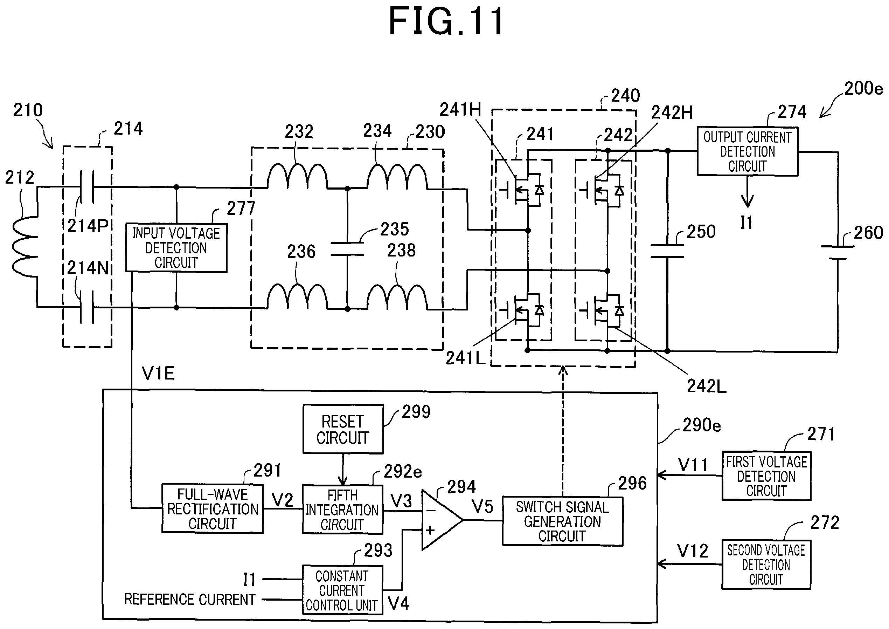

As illustrated in Fig. 11, a power receiving device 200e according to a fifth embodiment is different from the power receiving device 200b of the second embodiment illustrated in Fig. 7 in that the power receiving device 200e includes an input voltage detection circuit 277 and a control circuit 290e in place of the input current detection circuit 276 and the control circuit 290b and the other components are similar. The power receiving device 200e according to the fifth embodiment performs the peak current mode control using an input voltage V1E of the synchronous rectification circuit 240 detected by the input voltage detection circuit 277.

The input voltage detection circuit 277, which is disposed between the power receiving resonance circuit 210 and the immittance converter 230, detects an input voltage of the immittance converter 230. Here, the immittance converter 230, which is seen as a constant-current source as viewed from the output side, outputs a constant current proportional to the input voltage. Accordingly, it is possible to perform the peak current mode control as in the second embodiment by acquiring the input voltage V1E of the immittance converter 230 in place of the output current from the immittance converter 230 (the input current to the synchronous rectification circuit 240).

The control circuit 290e includes a fifth integration circuit 292e having a function similar to that of the first integration circuit 292. The full-wave rectification circuit 291 outputs the current waveform V2 provided by the full-wave rectification of the input voltage V1E and the fifth integration circuit 292e integrates the current waveform V2 with respect to phase or the time T0 to output the current waveform V3 as in the second embodiment.

As described above, the control circuit 290e adjusts the timing of switching from the first rectification mode M1 to the first commutation mode M2 and the timing of switching from the second rectification mode M3 to the second commutation mode M4 by the peak current mode control using the input voltage V1E of the immittance converter 230. The power receiving device 200e in this form is also able to produce an effect similar to that of the second embodiment.

### F. Other Embodiments:

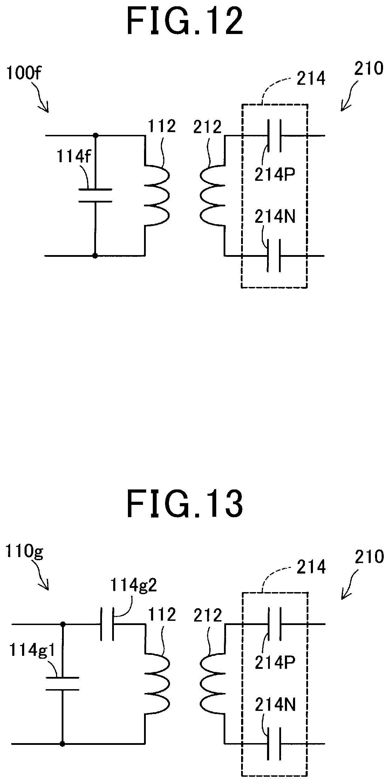

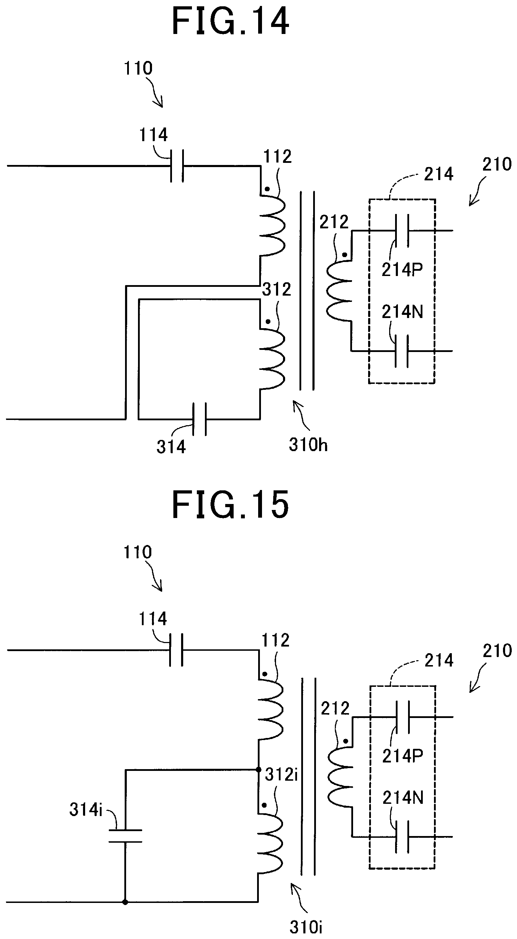

(F1) In the above embodiments, the description is given on the example where a resonance scheme (also referred to as "SS scheme") based on a primary series-secondary series capacitor is applied to the power transmitting resonance circuit 110 and the power receiving resonance circuit 210 as illustrated in Fig. 1. In this regard, as illustrated in Fig. 12, a power transmitting resonance circuit 110f may be in a form of a parallel resonance circuit in which a power transmitting resonance capacitor 114f is connected in parallel to the power transmitting coil 112 and a primary parallel-secondary series scheme (also referred to as "PS scheme") may be applied to the power transmitting resonance circuit 110f and the power receiving resonance circuit 210. Moreover, as illustrated in Fig. 13, a power transmitting resonance circuit 110g may include a power transmitting resonance capacitor 114g1 connected in parallel to the power transmitting coil 112 and a power transmitting resonance capacitor 114g2 connected in series to the power transmitting coil 112 and a primary parallel/series-secondary series scheme (also referred to as "PSS scheme") may be applied to the power transmitting resonance circuit 110g and the power receiving resonance circuit 210. Moreover, as illustrated in Fig. 14, the power transmitting device 100 may be provided with a tertiary resonance circuit 310h, which is a circuit independent of the power transmitting resonance circuit 110, including series-connected tertiary coil 312 and tertiary resonance capacitor 314. The tertiary resonance circuit 310h is disposed with the tertiary coil 312 magnetically coupled to each of the power transmitting coil 112 and the power receiving coil 212. It should be noted that the tertiary resonance circuit 310h may include the parallel-connected tertiary coil 312 and tertiary resonance capacitor 314. Moreover, in the power transmitting device 100, a tertiary resonance circuit 310i including parallel-connected tertiary coil 312i and tertiary resonance capacitor 314i may be connected in series to the power transmitting coil 112 as illustrated in Fig. 15. The tertiary resonance circuit 310i is disposed with the tertiary coil 312i magnetically coupled to each of the power transmitting coil 112 and the power receiving coil 212.

(F2) In the above embodiments, the description is given on the example where the first voltage detection circuit 271 and the second voltage detection circuit 272 are provided and the first voltage detection circuit 271 detects the energization of the first bridge circuit 241 by detecting the terminal-to-terminal voltage V11 of the first low-side switch 241L and the second voltage detection circuit 272 detects the energization of the second bridge circuit 242 by detecting the terminal-to-terminal voltage V12 of the second low-side switch 242L. In this regard, the power receiving device 200 may include, in place of or in addition to the first voltage detection circuit 271, a current sensor that detects the energization of the body diode of the first high-side switch 241H in order to detect the energization of the first bridge circuit 241. Moreover, the power receiving device 200 may include, in place of or in addition to the second voltage detection circuit 272, a current sensor that detects the energization of the body diode of the second high-side switch 242H in order to detect the energization of the second bridge circuit 242. For example, the respective current sensors may be disposed downstream of the first high-side switch 241H and downstream of the second high-side switch 242H. Such a configuration also makes it possible to detect the energization of the first bridge circuit 241 and the energization of the second bridge circuit 242.

(F3) In the above embodiments, the description is given on the example where in response to detecting rises in the DS voltages of the first low-side switch 241L and the second low-side switch 242L, the control circuit 290 switches on the first high-side switch 241H and switches on the second high-side switch 242H. In this regard, in response to detecting drops in the DS voltages of the first high-side switch 241H and the second high-side switch 242H, the control circuit 290 may switch on the first high-side switch 241H and switch on the second high-side switch 242H. In this case, the first voltage detection circuit 271 is connected to both ends of the first high-side switch 241H and the second voltage detection circuit 272 is connected both ends of the second high-side switch 242H. Such a configuration also makes it possible to produce an effect similar to those of the above embodiments.

(F4) In the above embodiments, the description is given on the example where in the control circuit 290, the timing of switching from the first rectification mode M1 to the first commutation mode M2 and the timing of switching from the second rectification mode M3 to the second commutation mode M4 are both decreased to be shorter than the half cycle of the preset power transmission frequency. In this regard, only one of the timings may be decreased to be shorter than the half cycle of the power transmission frequency.

(F5) In the above embodiments, the description is given on the example where the control circuit 290 switches off the first low-side switch 241L every cycle corresponding to the power transmission frequency after the first high-side switch 241H is turned on in the first rectification mode M1 to repeat the cyclic synchronous rectification operation in the first bridge circuit 241. In this regard, the power receiving device 200 may further include a first cycle detector that detects a cycle of a current waveform or a voltage waveform in the first bridge circuit 241. In this case, the control circuit 290 may switch off the first low-side switch 241L in response to detecting the elapse of one cycle of the current waveform or the voltage waveform during the power supply control from a detection result of the first cycle detector. The power receiving device 200 in this form also makes it possible to repeat the cyclic synchronous rectification operation with a higher reliability than in a case where a sensor or the like is used to detect a drop in the DS voltage of the first high-side switch 241H.

(F6) In the above embodiments, the description is given on the example where the control circuit 290 switches off the second low-side switch 242L every cycle corresponding to the power transmission frequency after the second high-side switch 242H is turned on in the second rectification mode M3 to repeat the cyclic synchronous rectification operation in the second bridge circuit 242. In this regard, the power receiving device 200 may further include a second cycle detector that detects a cycle of a current waveform or a voltage waveform in the second bridge circuit 242. In this case, the control circuit 290 may switch off the second low-side switch 242L in response to detecting the elapse of one cycle of the current waveform or the voltage waveform during the power supply control from a detection result of the second cycle detector. The power receiving device 200 in this form also makes it possible to repeat the cyclic synchronous rectification operation with a higher reliability than in a case where a sensor or the like is used to detect a drop in the DS voltage of the second high-side switch 242H.

The control unit and the method thereof described in the present disclosure may be implemented by a dedicated computer including a processor programmed to execute one or a plurality of functions embodied by a computer program and a memory. Alternatively, the control unit and the method thereof described in the present disclosure may be implemented by a dedicated computer including a processor including one or more dedicated hardware logic circuits. Alternatively, the control unit and the method thereof described in the present disclosure may be implemented by one or more dedicated computers including a combination of a processor programmed to execute one or a plurality of functions and a memory with one or more hardware logic circuits. Moreover, the computer program may be stored in a computer-readable non-transitory tangible recording medium as an instruction to be executed by the computer.

The present disclosure is not limited to the above-described embodiments and may be implemented in various configurations without departing from the spirit of the present disclosure. For example, the technical features in the embodiments corresponding to the technical features in the aspects described in Summary of the Invention may be replaced or combined as appropriate in order to solve some or all of the above problems or in order to achieve some or all of the above effects. Moreover, the technical features may be deleted as appropriate unless described as essential herein.

## Claims

1. A power receiving device (200, 200b, 200c, 200d, 200e) configured to wirelessly receive an alternating-current power transmitted from a power transmitting device (100) and supply the alternating-current power to a load device, the power receiving device comprising:
a power receiving resonance circuit (210) including a power receiving coil (212) and a resonance capacitor (214) for producing resonance of the power receiving coil;
a synchronous rectification circuit (240) including a plurality of bridge circuits, the plurality of bridge circuits including a first bridge circuit (241) including a first high-side switch (241H) and a first low-side switch (241L) and a second bridge circuit (242) including a second high-side switch (242H) and a second low-side switch (242L), the synchronous rectification circuit being configured to convert the alternating-current power received by the power receiving coil into a direct-current power; and
a control unit (290, 290b, 290c, 290d, 290e) configured to control the plurality of bridge circuits, wherein
the control unit is configured to perform a power supply control, the power supply control including repeatedly performing:
a first rectification mode (M1) in which in response to detection of an energization of the first bridge circuit, the first high-side switch and the second low-side switch are turned on and the first low-side switch and the second high-side switch are turned off; and
a second rectification mode (M3) in which in response to detection of an energization of the second bridge circuit, the first low-side switch and the second high-side switch are turned on and the first high-side switch and the second low-side switch are turned off, and
the control unit is configured to perform a power adjustment control, the power adjustment control including:
a first commutation mode (M2) in which the first high-side switch is turned off and the first low-side switch is turned on during the first rectification mode; and
a second commutation mode (M4) in which the second high-side switch is turned off and the second low-side switch is turned on during the second rectification mode.

2. The power receiving device according to claim 1, further comprising
a first current detecting unit (274) configured to detect an output current of the synchronous rectification circuit, wherein
the control unit is configured to adjust, with use of a detection value (I1) of the first current detecting unit and a reference current, a timing of switching from the first rectification mode to the first commutation mode and a timing of switching from the second rectification mode to the second commutation mode, in the power adjustment control.

3. The power receiving device according to claim 1, further comprising
a first voltage detecting unit (271) configured to detect a terminal-to-terminal voltage of the first high-side switch or a terminal-to-terminal voltage (V11) of the first low-side switch, wherein
the control unit is configured to detect the energization of the first bridge circuit by acquiring a detection result of the first voltage detecting unit and detecting a drop in the terminal-to-terminal voltage of the first high-side switch or a rise in the terminal-to-terminal voltage of the first low-side switch.

4. The power receiving device according to claim 1, further comprising
a second voltage detecting unit (272) configured to detect a terminal-to-terminal voltage of the second high-side switch or a terminal-to-terminal voltage (V12) of the second low-side switch, wherein
the control unit is configured to detect the energization of the second bridge circuit by acquiring a detection result of the second voltage detecting unit and detecting a drop in the terminal-to-terminal voltage of the second high-side switch or a rise in the terminal-to-terminal voltage of the second low-side switch.

5. The power receiving device according to claim 1, further comprising
a first cycle detector configured to detect a cycle of a current waveform or a cycle of a voltage waveform in the first bridge circuit, wherein
the control unit is configured to switch off the first low-side switch in response to the first cycle detector detecting an elapse of one cycle during the power supply control.

6. The power receiving device according to claim 5, further comprising
a second cycle detector configured to detect a cycle of a current waveform or a cycle of a voltage waveform in the second bridge circuit, wherein
the control unit is configured to switch off the second low-side switch in response to the second cycle detector detecting an elapse of one cycle during the power supply control.

7. The power receiving device according to claim 1, wherein
the control unit is configured to switch off the first low-side switch at a time point shorter than a time point of an elapse of one cycle corresponding to a preset power transmission frequency since the first high-side switch is turned on in the first rectification mode.

8. The power receiving device according to claim 7, wherein
the control unit is configured to switch off the second low-side switch at a time point shorter than a time point of an elapse of one cycle corresponding to the power transmission frequency since the second high-side switch is turned on in the second rectification mode.

9. The power receiving device according to claim 1, wherein
the control unit is configured to decrease at least one of a timing of switching from the first rectification mode to the first commutation mode or a timing of switching from the second rectification mode to the second commutation mode to be shorter than a half cycle of the preset power transmission frequency.

10. The power receiving device according to claim 2, further comprising:
a second current detecting unit (276) configured to detect an input current of the synchronous rectification circuit;
a full-wave rectification circuit (291) configured to full-wave rectify the input current detected by the second current detecting unit; and
a first integration circuit (292) configured to integrate a current waveform full-wave rectified by the full-wave rectification circuit, wherein
the control unit is configured to adjust the timing of switching from the first rectification mode to the first commutation mode and the timing of switching from the second rectification mode to the second commutation mode, using a peak current mode control which uses a current waveform integrated by the first integration circuit in addition to the detection value of the first current detecting unit and the reference current.

11. The power receiving device according to claim 2, further comprising:
a third current detection circuit (278) configured to detect the output current of the synchronous rectification circuit; and
a second integration circuit (292c) configured to integrate a current waveform of the output current detected by the third current detection circuit, wherein
the control unit is configured to adjust the timing of switching from the first rectification mode to the first commutation mode and the timing of switching from the second rectification mode to the second commutation mode, using a peak current mode control which uses the current waveform integrated by the second integration circuit in addition to the detection value of the first current detecting unit and the reference current.

12. The power receiving device according to claim 2, further comprising:
an immittance converter (230) disposed between the power receiving resonance circuit and the synchronous rectification circuit;
a third integration circuit (298) configured to integrate a voltage waveform obtained by a magnetic coupling to an output-side reactor (234, 238) of the immittance converter and output it as a current waveform;
a full-wave rectification circuit (291) configured to full-wave rectify the current waveform outputted from the third integration circuit; and
a fourth integration circuit (292d) configured to integrate the current waveform full-wave rectified by the full-wave rectification circuit, wherein
the control unit is configured to adjust the timing of switching from the first rectification mode to the first commutation mode and the timing of switching from the second rectification mode to the second commutation mode, using a peak current mode control which uses the current waveform integrated by the fourth integration circuit in addition to the detection value of the first current detecting unit and the reference current.

13. The power receiving device according to claim 2, further comprising:
an immittance converter (230) disposed between the power receiving resonance circuit and the synchronous rectification circuit;
a voltage detection circuit (270) configured to detect an input voltage of the immittance converter;
a full-wave rectification circuit (291) configured to full-wave rectify a voltage waveform of the input voltage detected by the voltage detection circuit; and
a fifth integration circuit (292e) configured to integrate a current waveform full-wave rectified by the full-wave rectification circuit, wherein
the control unit is configured to adjust the timing of switching from the first rectification mode to the first commutation mode and the timing of switching from the second rectification mode to the second commutation mode, using a peak current mode control which uses the current waveform integrated by the fifth integration circuit in addition to the detection value of the first current detecting unit and the reference current.

14. A program for controlling a power receiving device (200, 200b, 200c, 200d, 200e) configured to wirelessly receive an alternating-current power transmitted from a power transmitting device (100), the program causing a computer to implement:
a function to perform a power supply control including repeatedly performing:
a first rectification mode (M1) in which in response to detection of an energization of, out of a plurality of bridge circuits including a first bridge circuit (241) including a first high-side switch (241H) and a first low-side switch (241L) and a second bridge circuit (242) including a second high-side switch (242H) and a second low-side switch (242L), the first bridge circuit, the first high-side switch and the second low-side switch are turned on and the first low-side switch and the second high-side switch are turned off, the plurality of bridge circuits being provided in a synchronous rectification circuit (240) which converts the alternating-current power received by a power receiving coil (212) provided in the power receiving device into a direct-current power; and
a second rectification mode (M3) in which in response to detection of an energization of the second bridge circuit, the first low-side switch and the second high-side switch are turned on and the first high-side switch and the second low-side switch are turned off; and
a function to perform a power adjustment control including:
a first commutation mode (M2) in which the first high-side switch is turned off and the first low-side switch is turned on during the first rectification mode; and
a second commutation mode (M4) in which the second high-side switch is turned off and the second low-side switch is turned on during the second rectification mode.
